# EUROPEAN PATENT APPLICATION

(11) **EP 2 849 089 A1**
(43) Date of publication of application: **18.03.2015**
(21) Application number: 12890515.5
(22) Date of filing: 27.12.2012
(51) Int. Cl.: G06F 17/30

(54) **VIRTUAL TABLE INDEXING MECHANISM AND METHOD CAPABLE OF REALIZING MULTI-ATTRIBUTE COMPOUND CONDITION QUERY**

(30) Priority: 19.12.2012 CN 201210553946
(71) Applicant: Guangdong Electronics Industry Institute Ltd., Dongguan, Guangdong 523808 (CN)
(72) Inventor: LI, Xiaolin, DongGuan Guangdong 523808 (CN); XIE, Yi, DongGuan Guangdong 523808 (CN); XU, Zhiwei, DongGuan Guangdong 523808 (CN); YUE, Qiang, DongGuan Guangdong 523808 (CN)
(74) Representative: Hocking, Adrian Niall
(86) International application number: PCT/CN2012/087667
(87) International publication number: WO 2014/094331

(57) **Abstract**

A virtual table index mechanism and a method for a multi-attribute compound condition query relate to a field of computer application technology. The virtual table index mechanism for a multi-attribute compound condition query includes: an index manager; a condition analyzer; and a pre-execution engine. The present invention forms index key values corresponding to a plurality of attributes in a virtual table. When querying, a query condition for the virtual table is calculated. Referring to a key value index, whether a physical table mapped by the virtual table should be executed is independently pre-judged according to the attributes, so as to ensure that query is applied only to a virtual sub-table satisfying a corresponding key value condition. The present invention is effective for multi-attribute compound condition query, and is suitable for indexing virtual tables.

## Description

### Field of Invention

The present invention relates to a field of computer application technology, and more particularly to virtual table index mechanism and method for a multi-attribute compound condition query.

### Description of Related Arts

With the rapid growth of applications data on internet, a single database table is often unable to support all business data. Big data need to be divided into a plurality of physical sub-tables for storage and management; a middleware will integrate these physical sub-tables for forming a virtual table with "infinite capacity". With web application processing and computing being more complex, a data query for a virtual table may involve instant access to multiple distributed data sources (blocks). The large amount of associated query based on the distributed data sources, due to the size of the data, query complexity, transmission bandwidth and other factors, access performance is often the bottleneck in such applications. Therefore, for such applications, forming an index mechanism in a virtual layer, and rapidly positioning the sub-tables whilst avoiding unnecessary sub-table query is the key for improving query performance.

In a technical method level, there are two main methods for realizing the index mechanism for the multiple distributed data sources (blocks) query to improve the access performance.

Firstly: storage location index of sub-table, wherein the physical storage location of the data block sub-table is conveniently and rapidly positioned. Mass data storage and access need to divide the data into blocks for storing and managing. Herein the formed index mechanism for each data block contributes to request for rapidly positioning the target data source.

Secondly: sectional index of primary key value, wherein a sub-table stores a section of continuous data according to the primary key value in the data table; from a beginning primary key to an ending primary key, a whole table is stored in a plurality of physical sub-tables. The mechanism is extremely effective for supporting the query of a simple logical calculation based on the primary keys, and is able to ensure that the query is applied only to the data sub-tables satisfying the corresponding key value conditions. However, queries with multi-attribute query predicate conditions and relatively complex arithmetic logic are not supported.

The Ordered Table storage model, such as Bigtable, uses a hierarchical MetaData model for indexing tablet tables. Both storage location index and key value sectional index are supported. However, only interval query based on the primary key is supported, and the multi-attribute compound condition query, such as SQL query standard of relational databases, is not supported.

### Summary of the Present Invention

A first object of the present invention is to provide a virtual table index mechanism supporting distributed compound query conditions, which solves a problem that the conventional storage location index and key value index do not support multi-attribute conditions and complex arithmetic logic queries. A concept and technique of a virtual table in the present invention is based on a Chinese patent ZL200810119858.4 (title: network system and management method thereof) of the inventors of this present application; the virtual table, and utilization as well as management methods thereof are all quoted from the said Chinese patent.

A second object of the present invention is to provide a virtual table index method supporting distributed compound query conditions, which solves a problem that the conventional storage location index and key value index do not support multi-attribute conditions and complex arithmetic logic queries.

Accordingly, in order to accomplish the first object, the present invention provides a virtual table index mechanism for supporting a multi-attribute compound condition query, comprising:
an index manager;
a condition analyzer; and
a pre-execution engine;
wherein the index manager manages index key values of attributes of a virtual table, and supports a management of a single key value and an interval key value of the multiple attributes of the virtual table;
the condition analyzer disassembles a query condition applied to the virtual table and analyzes a predicate; the condition analyzer sequentially analyzes the whole query condition for every indexed attribute according to an SQL (Structure Query Language) grammar, and, after masking a predicate expression of other attributes with a true value, only maintains the predicate condition of the indexed attribute for judging whether an index of the indexed attribute satisfies the query condition; then, if the index key value of the attribute is an interval value, the analyzer further calculates whether the predicate of the attribute in the query condition masked with the true value is true or false according to the interval value, and replaces the predicate with a Boolean result (true/false); if the predicate is not able to be calculated, then return directly to and display an inferred result of needing to query the virtual;
the pre-execution engine judges whether the query condition partially replaced by a true value expression and the Boolean result is true or false according to the index key value of the corresponding attribute, and determines whether the index of the corresponding attribute satisfies the query condition; if the query condition is not satisfied, then return directly to an inferred result of not querying the virtual table; if the query condition is satisfied, then continue to judge other indexed attributes; in some cases, an execution condition is satisfied by default; if the index key value is the interval value, only a beginning value and an ending value are utilized.

Accordingly, in order to accomplish the second object, the present invention provides a virtual table index method for supporting a multi-attribute compound condition query, comprising steps of:
forming index key values corresponding to a plurality of attributes in a virtual table; when querying, calculation is applied to a query condition of the virtual table; referring to a key value index, independently pre-judging whether, for each attribute, it is required to execute the physical entity table mapped by the virtual table, so as to ensure that query is applied only to an execution of a virtual sub-table satisfying a corresponding key value condition.

For pre-judging which sub-table comprises data records satisfying the query condition, the virtual table index method further comprises: in a virtual layer, according to an index based on the sub-table on each sub-table, pre-judging whether a data collection of the sub-table satisfies the query condition and only positioning on to the sub-tables if the query condition is satisfied for querying; for exceptions of filter conditions with no query, if index has not been set up or if there are difficulties in pre-judging based on the index, the sub-table is directly queried.

The virtual table index method further comprises:
forming a sub-table index structure similar to in a B+ tree according to a certain attribute key value, wherein each leaf node of a B+ tree is one of the sub-tables; forming an index for one or more of the (other) attributes at the leaf nodes, wherein an index value is a single value or an interval value.

Two replacements of the query condition is an independently analyzing and judging each index attribute according to a language tree formed by analyzing an SQL query condition.

Preferably, for a value in an interval, a predicate expression is transformed to comparison logic for calculating Boolean results by substituting with the interval value.

According to the present invention, the virtual table index mechanism is different from a database table index. The index of the database table is for quickly positioning data records, while the virtual table index is for quickly determining whether it is necessary to apply a query with a condition to the virtual table, which is mainly for scheduling query and improving distributed query efficiency. Because a general data secondary table has a determined regularity, data meeting certain conditions are often stored in one sub-table. For example, railway annual freight summary data are stored separately in 12 sub-tables by month, so as to facilitate analysis on year-on-year basis. Therefore, the virtual table index is determined by overall perspective of the sub-tables, rather than using a specific record to build an index. As a result, an index quantity is relatively low.

According to the present invention, the virtual table multi-attribute index is formed in the virtual layer. During query disassembling, the query condition is pre-judged by indexing to determine whether it is applicable, so as to determine whether the physical sub-table needs to be positioned and queried. Compared to "key-value" and ordered table model database systems which only support interval query based on primary key, the present invention is able to form a multi-attribute index, and support judgments on multi-attribute compound condition query; the present invention also supports multi-attribute query predicate conditions, and relatively complex arithmetic logic queries, such as to support the SQL standard of relational databases.

The physical sub-table concept according to the present invention is abstractly defined from a metadata aspect, wherein physical systems for storing and managing sub-table data are not involved. Therefore, the physical sub-table may also be regarded as a virtual table.

### Brief Description of the Drawings

Fig. 1 is a sketch view of a system structure according to a preferred embodiment of the present invention.
Fig. 2 is a sketch view of an index management structure according to the preferred embodiment of the present invention.
Fig. 3 is a sketch view of a core algorithm according to the preferred embodiment of the present invention.

### Detailed Description of the Preferred Embodiment

According to the present invention, in a virtual table, index key values for a plurality of attributes are formed. When executing query, a query condition applied to the virtual table is calculated. Referring to a key value index, whether to execute (the virtual table mapping the physical entity table) or not is independently pre-judged for each of the attributes, so as to ensure that query is applied only to a virtual sub-table satisfying a corresponding key value condition. Compared to the conventional technology, the present invention supports multi-attribute query predicate conditions, and relatively complex arithmetic logic queries, such as the SQL standard of relational databases.

Accordingly, a virtual table index mechanism for supporting a multi-attribute compound condition query according to a preferred embodiment of the present invention is illustrated, comprising:
an index manager;
a condition analyzer; and
a pre-execution engine;
wherein the index manager manages index key values of attributes of a virtual table, and management of a single key value and an interval key value of the attributes of the virtual table is supported by the index manager;
the condition analyzer disassembles a query condition for the virtual table and analyzes a predicate; the condition analyzer sequentially analyzes the query condition for every indexed attribute according to an SQL (Structure Query Language), after masking a predicate expression of non-attributes with a true value, only a predicate condition of the non-indexed attribute is maintained for judging whether an index of the non-indexed attribute satisfies the query condition; meanwhile, if the index key value of one of the attributes is an interval value, the analyzer further calculates whether a predicate of the attribute in the query condition masked with the true value is true or false according to the interval value, and replaces the predicate with a Boolean result (true/false); if the predicate is not able to be calculated, then return directly to an inferred result of needing to query the virtual table;
the pre-execution engine judges whether the query condition replaced by a true value expression and the Boolean result is true of false according to the index key value (only a beginning value and an ending value are needed) of the corresponding attribute, so as to determine whether an index of the corresponding attribute satisfies the query condition; if the query condition is not satisfied, then return directly to an inferred result of not querying the virtual table; if the query condition is satisfied, then continue to judge other indexed attributes; in some cases, for simplifying judgment, the pre-execution engine satisfies an execution condition by default; for example, the pre-execution engine comprises a multivariate predicate expression.

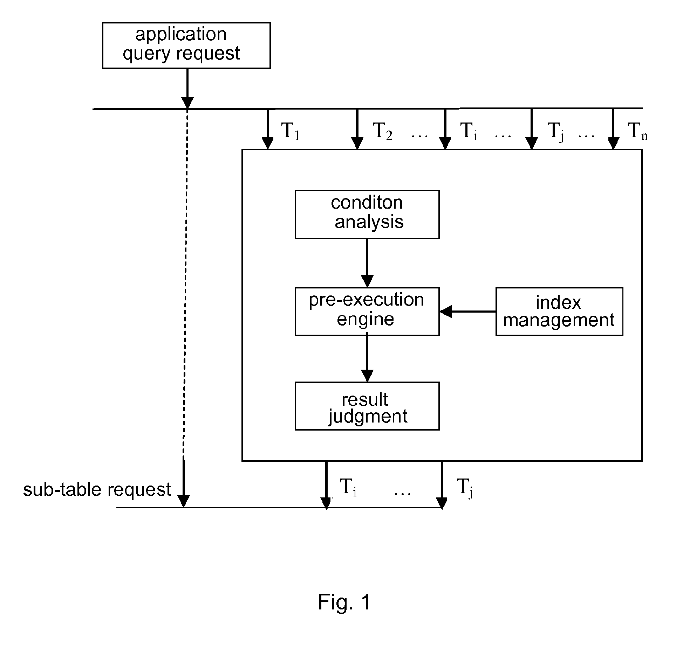

Referring to Fig. 1, there are too many sub-tables due to mass data. As a result, a query request applied once is not able to be executed on each of the sub-tables, and which sub-table comprises data records (which may be an interval result or a single record) satisfying the query condition is pre-determined. In a virtual layer, according to an index based on the sub-table in each sub-table (T₁, T₂,...Tₙ), whether a data collection of the sub-table satisfies the query condition is pre-judged, and only the sub-tables satisfying the query condition (Tᵢ,...Tⱼ) is positioned for querying. In some cases (such as filter conditions with no query, the index has not been set up or there are difficulties in pre-judging based on the index), the sub-table is directly queried.

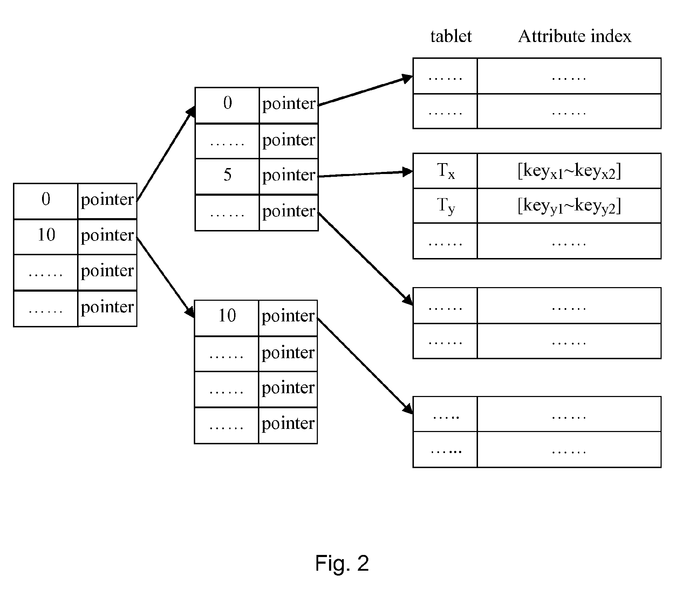

Referring to Fig. 2, for rapidly positioning the sub-table, a sub-table index structure similar to a B+ tree is formed according to a certain attribute key value, wherein each leaf node of a B+ tree is one of the sub-tables. An index is formed for one or more of the (other) attributes on the leaf nodes. An index value is the single value or the interval value. An attribute index value is the interval value defined by overall perspective of the sub-table. The smaller a range of an index value interval is, the easier judgment will be. Therefore, the index is suitable for being formed in a column with a high cardinal number and low selectivity in the virtual layer. However, in a database layer, in order to conveniently position a certain record by indexing, the index is suitable for being formed in a column with a low cardinal number and high selectivity (wherein the cardinal number is defined as: row number / number of unique values; the selectivity is defined as: 1 / number of unique values). For different application situations, the index value will vary according to conditions such as data increasing, modifying or deleting, and sub-table splitting or merging. Variation frequency and complexity are different in different situations, and emphasis is not put on a uniform synchronization of the index value in the present invention. The index may be provided artificially or constantly maintained during data operation.

In conventional data integration applications such as GAV (Global As View) / LAV (Local As View), a schema of a virtual view is different from a schema of a physical data source, and is determined by a mapping mechanism. Therefore, the query condition should be analyzed for each of the sub-tables for mapping the query to sub-table query. For general "key-value" or ordered table data model, because the attributes of the sub-tables are uniform, there is no need to analyze the query condition for each of the sub-tables. Therefore, the method according to the present invention is applicable to the "key-value", ordered table, and conventional relational database integration fields.

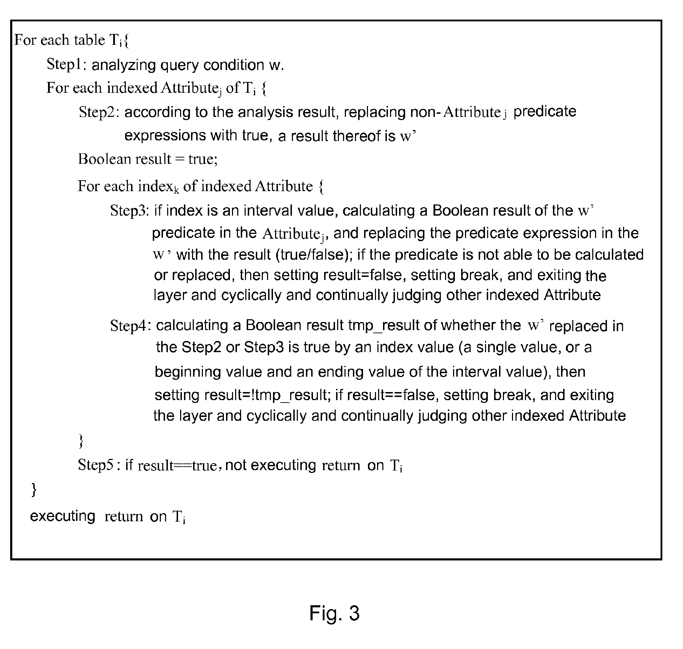

Referring to Fig. 3, a core algorithm according to the present invention is illustrated, wherein two replacements (Step2, Step3) of the query condition are key steps. Each index attribute is independently analyzed and judged according to a language tree formed by analyzing an SQL query condition. Supposing that in a rail freight detail table, data secondary tables are managed by being divided into a plurality of sub-tables according to Month and Line (wherein an index thereof is illustrated in the following table; when there are too many sub-tables, an index tree may be formed according to Line as illustrated in Fig. 2).

| Table | Month index | Line index |
|---|---|---|
| ...... | | |
| Tᵢ | _1001~_1031 | 0005 |
| ...... | | |
| Tⱼ | _1101~_1130 | 0006 |
| ...... | | |

For querying freight details of the Line 0005 in a certain week, a filter condition is: month > 20121008 and month < 20121014 and line = 0005.

For the Table Tᵢ, Month index is firstly judged. A result of Step2 is: month > = 20121008 and month < 20121014 and true. In Step3, for a predicate of month >= 20121008, an index asterisk wildcard in the index is replaced by 20121001~20121031, then the predicate is transformed in such a manner that a calculation result of 20121001 <= 20121008 and 20121008 <= 20121031 is true. Similarly, a predicate of month < 20121014 is transformed to: true and true and true. Then a calculation result of tmp_result in Step 4 is true, in such a manner that result = false.

Then Line index of the Table Tᵢ is judged, and a condition after the Step 2 is: true and true and line = 0005. The Step3 is skipped and whether the condition is true is judged according to the value of 0005 in the Step 4. The pre-execution engine determines that the condition is true if a non-null result is obtained after sending a query of "select line from (select 0005 as line) TT where true and true and line = 0005" to an in-memory database engine, so as to ensure that any SOL standard complex query condition comprising the attribute of Line is able to obtain the result. In practice, a plurality of single value indexes may be merged, in such a manner that whether there is a key value satisfying the condition is able to be judged by executing the Step4 once. A final result is that the Table Tᵢ should be executed.

For the Table Tⱼ, after judging the Month index in the Step3, the condition is: false and false and true. A calculation result of tmp_result is false, in such a manner that result = true, and the Table Tⱼ will not be executed.

Difficulties lie in the Step3. As whether the predicate is true is not able to be judged by exhausting values in an interval (wherein in practice, judgment is provided by substituting values of a certain record column), the predicate expression must be transformed to comparison logic for calculating Boolean results by substituting the interval values, which is similar to solving an equation with one unknown quantity. Considering complexity, only first-order predicate expressions, which are relatively simple, are able to be calculated at present, and other predicate expressions are all regarded as irreplaceable.

## Claims

1. A virtual table index mechanism for supporting a multi-attribute compound condition query, comprising:
an index manager;
a condition analyzer; and
a pre-execution engine;
wherein the index manager manages index key values of attributes of a virtual table, and supports a management of a single key value and an interval key value of the multiple attributes of the virtual table;
the condition analyzer disassembles a query condition applied to the virtual table and analyzes a predicate; the condition analyzer sequentially analyzes the whole query condition for every indexed attribute according to an SQL (Structure Query Language) grammar, and, after masking a predicate expression of other attributes with a true value, only maintains the predicate condition of the indexed attribute for judging whether an index of the indexed attribute satisfies the query condition; meanwhile, if the index key value of the attribute is an interval value, the analyzer further calculates whether the predicate of the attribute in the query condition masked with the true value is true or false according to the interval value, and replaces the predicate with a Boolean result (true/false); if the predicate is not able to be calculated, then return directly to and display an inferred result of needing to query the virtual table;
the pre-execution engine judges whether the query condition partially replaced by a true value expression and the Boolean result is true or false according to the index key value of the corresponding attribute, and determines whether the index of the corresponding attribute satisfies the query condition; if the query condition is not satisfied, then return directly to an inferred result of not querying the virtual table; if the query condition is satisfied, then continue to judge other indexed attributes; in some cases, an execution condition is satisfied by default; if the index key value is the interval value, only a beginning value and an ending value are utilized.

2. A virtual table index method for supporting a multi-attribute compound condition query, comprising steps of:
forming index key values corresponding to a plurality of attributes in a virtual table; when querying, calculation is applied to a query condition of the virtual table; referring to a key value index, independently pre-judging whether, for each attribute, it is required to execute the physical entity table mapped by the virtual table, so as to ensure that query is applied only to an execution of a virtual sub-table satisfying a corresponding key value condition.

3. A virtual table index method as claimed in claim 2, wherein for pre-judging which sub-table comprises data records satisfying the query condition, the virtual table index method further comprises: in a virtual layer, according to an index based on the sub-table on each sub-table, pre-judging whether a data collection of the sub-table satisfies the query condition and only positioning on to the sub-tables if the query condition is satisfied for querying; for exceptions of filter conditions with no query, if the index has not been set up or if there are difficulties in pre-judging based on the index, the sub-table is directly queried.

4. A virtual table index method as claimed in claim 2, further comprising:
forming a sub-table index structure similar to a B+ tree according to a certain attribute key value, wherein each leaf node of a B+ tree is one of the sub-tables; forming an index for one or more of the (other) attributes on the leaf nodes, wherein an index value is a single value or an interval value.

5. A virtual table index method as claimed in claim 3, further comprising:
forming a sub-table index structure similar to a B+ tree according to a certain attribute key value, wherein each leaf node of a B+ tree is one of the sub-tables; forming an index for one or more of the (other) attributes at the leaf nodes, wherein an index value is a single value or an interval value.

6. A virtual table index method as claimed in any one of claims 2 to 5, wherein two replacements of the query condition is an independently analyzing and judging each index attribute according to a language tree formed by analyzing an SQL query condition.

7. A virtual table index method as claimed in any one of claims 2 to 5, wherein for a value in an interval, a predicate expression is transformed to comparison logic for calculating Boolean results by substituting with the interval value.

8. A virtual table index method as claimed in claim 6, wherein for a value in an interval, a predicate expression is transformed to comparison logic for calculating Boolean results by substituting with the interval value.
